# EUROPEAN PATENT SPECIFICATION

(11) **EP 4 357 234 B1**
(45) Date of publication and mention of the grant of the patent: **29.04.2026**
(21) Application number: 22863943.1
(22) Date of filing: 28.04.2022
(51) Int. Cl.: B63B 25/16, F02B 43/10, F17C 13/00, F25J 1/02, F25J 3/06, F25J 3/08, F02M 21/02, F02M 25/00, B63H 21/14, B63H 21/38, F23K 5/00, F17C 9/00, B63B 17/00, F02B 61/04, F17C 6/00, F17C 9/02, F23K 5/04, F25J 1/00, B01D 53/22

(54) **FLOATING BODY**
SCHWIMMKÖRPER
CORPS FLOTTANT

(30) Priority: 31.08.2021 JP 2021141040
(43) Date of publication of application: 24.04.2024
(73) Proprietor: Mitsubishi Shipbuilding Co., Ltd., Tokyo 108-8015 (JP)
(72) Inventor: YAMADA Daisuke, Yokohama-shi, Kanagawa 220-8401 (JP)
(74) Representative: Studio Torta S.p.A.
(86) International application number: PCT/JP2022/019360
(87) International publication number: WO 2023/032353

(56) References cited:
- EP-A1- 3 640 209
- WO-A1-2020/230979
- CN-A- 107 792 329
- CN-A- 112 696 289
- JP-A- 2009 204 080
- JP-A- 2018 162 751
- JP-A- 2019 014 335
- JP-A- S5 733 299
- KR-A- 20200 049 933
- US-A1- 2011 011 354

## Description

### Technical Field

The present disclosure relates to a floating structure.

### Background Art

PTL 1 discloses a ship using an LNG as a main fuel. In the ship using a liquefied gas such as the LNG as the main fuel, the liquefied gas is vaporized by natural heat input from an outside of a tank in a tank storing the liquefied gas, and a boil off gas (BOG) is generated. When the BOG inside the tank increases, a pressure inside the tank rises. Examples of BOG treatment for preventing a pressure increase inside the tank include treatment for re-liquefying a compressed BOG by using a refrigerating cycle of a re-liquefying device as disclosed in PTL 1 and returning the re-liquefied BOG into the tank as a liquid fuel, and treatment for introducing the re-liquefied BOG into a combustion device as a gas fuel. Document KR 2020 0049933 discloses a floating platform that processes and delivers ammonia to meet onshore demand including a tank for storing low-temperature liquid ammonia and its evaporation gas.

On the other hand, in a ship field, it is conceivable to introduce ammonia which is a decarbonization fuel as a fuel for the combustion device such as a main engine. When ammonia which is a type of the liquefied gas is used as the fuel for the combustion device, the BOG is also generated inside a tank for storing the ammonia. Therefore, the BOG treatment as described above is required.

In addition, a seal gas used in a device such as a pump or an inert gas such as a purge gas used to replace an atmosphere inside a pipe is mixed inside a tank of the liquefied gas during an operation of the ship. Therefore, a gas phase fraction inside the tank becomes a mixed gas of the inert gas and the BOG.

### Citation List

### Patent Literature

[PTL 1] Japanese Unexamined Patent Application Publication No. 2009-204026

### Summary of Invention

### Technical Problem

In the ship disclosed in PTL 1 above, the BOG inside a storage tank is re-liquefied to obtain the liquefied gas. However, in some cases, without being re-liquefied, the inert gas may be mixed in the liquefied gas while maintaining a gaseous state, and may return into the tank together with the liquefied gas. That is, in some cases, a ratio of the inert gas in the mixed gas may increase. Therefore, for example, when the mixed gas stored inside the tank is used as the gas fuel, there is a problem in that a calorific value per unit volume of the mixed gas decreases. In addition, when the ratio of the inert gas in the mixed gas increases, re-liquefying efficiency may be degraded in some cases.

The present disclosure is made to solve the above-described problems, and an object of the present disclosure is to provide a floating structure which can increase a calorific value per unit volume of a mixed gas stored inside a tank.

### Solution to Problem

According to the present disclosure, in order to solve the above-described problems, there is provided a floating structure including a floating main structure, a tank provided in the floating main structure, in which ammonia is stored and a mixed gas of the ammonia and another gas different from the ammonia is stored as a gas phase fraction, a compression unit to which the mixed gas inside the tank is guided to compress the mixed gas, a separation membrane into which the mixed gas compressed by the compression unit is introduced to separate the mixed gas into the ammonia and the other gas, and a cooling section that cools the ammonia separated by the separation membrane and returned into the tank.

### Advantageous Effects of Invention

According to the present disclosure, it is possible to provide a floating structure which can increase a calorific value per unit volume of a mixed gas stored inside a tank. Brief Description of Drawings

Fig. 1 is a side view of a floating structure according to an embodiment of the present disclosure.
Fig. 2 is a view illustrating a BOG treatment system according to a first embodiment of the present disclosure.
Fig. 3 is a view illustrating a BOG treatment system according to a second embodiment of the present disclosure.
Fig. 4 is a view illustrating a BOG treatment system according to a third embodiment of the present disclosure.
Fig. 5 is a view illustrating a BOG treatment system according to another embodiment of the present disclosure.
Fig. 6 is a view illustrating a BOG treatment system according to another embodiment of the present disclosure. Description of Embodiments

Hereinafter, a floating structure according to each embodiment of the present disclosure will be described with reference to the drawings.

### [First Embodiment]

### (Configuration of Floating Structure)

A floating structure in the present embodiment is a ship that uses ammonia as a fuel. A ship type of the floating structure is not limited to a specific one. For example, the ship type of the floating structure includes a liquefied gas carrier, a ferry, an RO-RO ship, an automobile carrier, and a passenger ship.

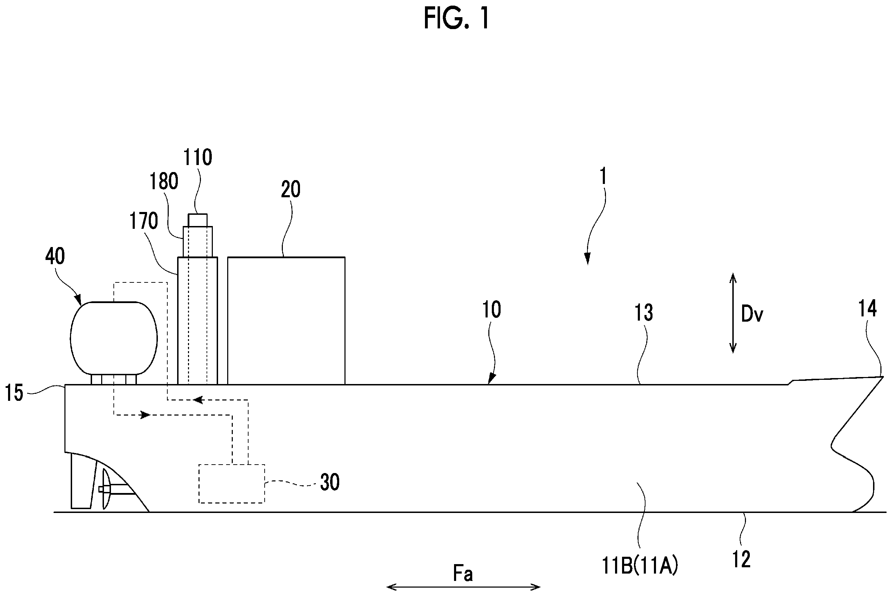

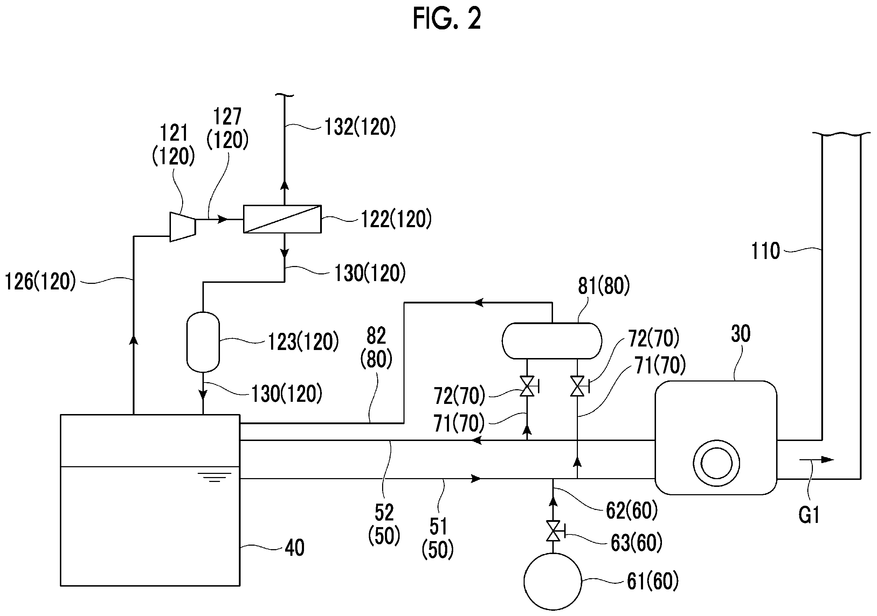

As illustrated in Figs. 1 and 2, a floating structure 1 includes a floating main structure 10, a superstructure 20, a combustion device 30, a tank 40, a fuel supply system 50, a gas supply system 60, and a purge system 70, an ammonia recovery system 80, and a BOG treatment system 120.

### (Floating Main Structure)

As illustrated in Fig. 1, the floating main structure 10 is a hull having broadsides 11A and 11B, a bottom 12, and an upper deck 13. The broadsides 11A and 11B have a pair of broadside skins respectively forming the broadside 11A and the broadside 11B on the right and left. The bottom 12 has a skin of the bottom 12 having a double bottom, which connects the broadsides 11A and 11B. The upper deck 13 is provided over a pair of broadside skins.

Due to the broadsides 11A and 11B, the bottom 12, and the upper deck 13, an outer shell of the floating main structure 10 has a box shape in a sectional view orthogonal to a bow-stern direction Fa. The bow-stern direction Fa in the present embodiment is a direction extending from a stern 15 to a bow 14 of the floating main structure 10.

### (Superstructure)

The superstructure 20 is a structure provided to face upward from the upper deck 13 in an upward-downward direction Dv. For example, an accommodation space and a bridge are provided inside the superstructure 20.

### (Combustion Device)

The combustion device 30 is a device that generates heat energy by combusting a fuel. For example, the combustion device 30 is provided in a section such as an engine room (not illustrated) provided inside the floating main structure 10. Examples of the combustion device 30 can include a main engine for propelling the floating structure 1, a generator for supplying electricity to the inside of the ship, and a boiler for generating steam as a working fluid. The combustion device 30 in the present embodiment is a main engine that uses ammonia as a fuel.

### (Tank)

In the tank 40, the tank 40 internally stores the ammonia as the fuel for the combustion device 30. For example, the tank 40 in the present embodiment is provided on an upper deck 13 on the stern 15 side in the bow-stern direction Fa with respect to the superstructure 20.

### (Fuel Supply System)

The fuel supply system 50 is a system that supplies the ammonia from the tank 40 to the combustion device 30. For example, the fuel supply system 50 in the present embodiment is provided inside the floating main structure 10.

As illustrated in Fig. 2, the fuel supply system 50 includes a supply line 51 and a return line 52.

The supply line 51 is a pipe connecting the tank 40 and the combustion device 30. The ammonia as the fuel flows through the supply line 51 from the tank 40 toward the combustion device 30. Therefore, the ammonia is introduced into the combustion device 30 from the tank 40 via the supply line 51. The supply line 51 is provided with a pump (not illustrated) for pumping the ammonia from the tank 40 to the combustion device 30, and a heat exchanger (not illustrated) for heating the ammonia inside the supply line 51 guided to the combustion device 30 by the pump.

The return line 52 is a pipe connecting the combustion device 30 and the tank 40. One end of the return line 52 is connected to the combustion device 30, and the other end is connected to the tank 40. In the return line 52, the ammonia remaining without being completely combusted inside the combustion device 30 flows from the combustion device 30 toward the tank 40. Therefore, the ammonia fed to the tank 40 by the return line 52 is supplied again into the supply line 51 inside the tank 40, and is used again for the combustion of the combustion device 30.

### (Gas Supply System)

The gas supply system 60 is a system that feeds an inert gas to the fuel supply system 50 and the combustion device 30 to purge the ammonia existing in the fuel supply system 50 and the combustion device 30. For example, the gas supply system 60 in the present embodiment is provided inside the floating main structure 10. The gas supply system 60 includes an inert gas supply device 61, a first purge line 62, and a first purge valve 63.

The inert gas supply device 61 is a device that generates and pumps the inert gas for non-reactive purging with the ammonia. For example, the inert gas includes a gas such as a nitrogen gas (N₂). For example, the inert gas supply device 61 in the present embodiment is provided inside the floating main structure 10.

Hereinafter, the inert gas will be referred to as the other gas as a gas different from the ammonia.

The first purge line 62 is a pipe through which the inert gas generated by the inert gas supply device 61 flows. One end of the first purge line 62 is connected to the inert gas supply device 61. The other end of the first purge line 62 is connected to the supply line 51.

The other gas pumped from the inert gas supply device 61 via the first purge line 62 flows into the supply line 51, and thereafter, is pumped to the combustion device 30 and the return line 52 in this order. In this manner, the other gas pushes out (purges) the ammonia existing inside the supply line 51, inside the combustion device 30, and inside the return line 52.

The first purge valve 63 is an automatically operated valve provided in the first purge line 62. The first purge valve 63 is normally in a closed state, and is in an open state at a predetermined timing. When the first purge valve 63 is in the open state, the other gas can flow inside the first purge line 62 from the inert gas supply device 61 toward the supply line 51. The automatically operated valve illustrated in the present embodiment includes an electromagnetic valve and a valve driven by an electric motor.

### (Purge System)

The purge system 70 is a system that guides ammonia remaining inside the supply line 51, inside the combustion device 30, and inside the return line 52 to the tank 40. For example, the purge system 70 in the present embodiment is provided inside the floating main structure 10. The purge system 70 includes a plurality of second purge lines 71 and a plurality of second purge valves 72.

Each one end of the plurality of second purge lines 71 is connected to the supply line 51 and the return line 52. The other ends of the plurality of second purge lines 71 extend toward the ammonia recovery system 80 outside the fuel supply system 50. The ammonia existing inside the supply line 51, inside the combustion device 30, and inside the return line 52 is purged by the other gas. In this manner, the ammonia is pushed to the outside of the fuel supply system 50 together with the other gas inside the second purge line 71.

In the present embodiment, as an example, two second purge lines 71 respectively connect the supply line 51 and the temporary storage unit 81, and the return line 52 and the temporary storage unit 81, respectively.

The plurality of second purge valves 72 are automatically operated valves respectively provided in the plurality of second purge lines 71. The second purge valve 72 is normally in a closed state, and is in an open state together with the first purge valve 63. Therefore, when the first purge valve 63 and the second purge valve 72 are in the open state, the other gas flows through the first purge line 62, and flows into the supply line 51, into the combustion device 30, and into the return line 52.

When the other gas flows into the supply line 51, into the combustion device 30, and into the return line 52, the ammonia purged by the other gas flows toward the temporary storage unit 81 via each of the second purge lines 71. That is, the ammonia remaining inside the supply line 51, inside the combustion device 30, and inside the return line 52 is replaced with (purged by) the other gas.

### (Ammonia Recovery System)

The ammonia recovery system 80 is a system that temporarily recovers the ammonia purged from the fuel supply system 50 through the purge system 70 and returns the recovered ammonia to the tank 40. For example, the ammonia recovery system 80 in the present embodiment is provided inside the floating main structure 10.

The ammonia recovery system 80 includes a temporary storage unit 81 and a recovery line 82.

The temporary storage unit 81 is a container that internally and temporarily stores the ammonia remaining inside the supply line 51, inside the combustion device 30, and inside the return line 52. The ammonia inside the supply line 51, inside the combustion device 30, and inside the return line 52 is introduced into the temporary storage unit 81 through the second purge line 71. For example, the temporary storage unit 81 in the present embodiment is provided inside the floating main structure 10.

The recovery line 82 is a pipe for returning the ammonia vaporized inside the temporary storage unit 81 to the tank 40. The recovery line 82 connects the temporary storage unit 81 and the tank 40. Therefore, the ammonia inside the temporary storage unit 81 flows inside the recovery line 82 toward the tank 40.

The ammonia recovery system 80 may include an oil catch tank for recovering oil stored inside the temporary storage unit 81 by taking the oil to the outside of the temporary storage unit 81, and an oil mist separator for recovering mist-like oil flowing inside the recovery line 82 together with the ammonia and the other gas to the oil catch tank.

One end of a flue 110 which is a duct for guiding an exhaust gas G1 generated in the combustion device 30 to the outside of the floating main structure 10 is connected to the combustion device 30. The other end of the flue 110 penetrates the upper deck 13, and extends upward in the upward-downward direction Dv outside the floating main structure 10. As illustrated in Fig. 1, a portion extending to the outside of the floating main structure 10 in the flue 110 is surrounded by a hull structure 170 and a funnel 180.

### (BOG Treatment System)

The BOG treatment system 120 is a system that treats a mixed gas of the ammonia stored as a gas phase fraction inside the tank 40 and the other gas different from the ammonia. The mixed gas in the present embodiment is a gas in which the BOG generated by volatilization of liquefied ammonia inside the tank 40 and the other gas flowing from the fuel supply system 50 and the ammonia recovery system 80 are mixed. For example, the BOG treatment system 120 in the present embodiment is provided inside the floating main structure 10.

The BOG treatment system 120 includes a first treatment line 126, a compression unit 121, a second treatment line 127, a separation membrane 122, a first ammonia line 130, a cooling section 123, and a gas line 132.

### (First Treatment Line)

The first treatment line 126 is a pipe that guides the mixed gas inside the tank 40 to the compression unit 121. The first treatment line 126 connects the tank 40 and the compression unit 121. Inside the first treatment line 126, the mixed gas introduced from the tank 40 flows toward the compression unit 121.

### (Compression Unit)

The compression unit 121 compresses the mixed gas inside the tank 40. The mixed gas is introduced into the compression unit 121 via the first treatment line 126. For example, the compression unit 121 in the present embodiment is provided inside the floating main structure 10. An example of the compression unit 121 includes a compressor used for an engine different from the combustion device 30 (main engine) of the present embodiment.

### (Second Treatment Line)

The second treatment line 127 is a pipe that guides the mixed gas compressed by the compression unit 121 to the separation membrane 122. The second treatment line 127 connects the compression unit 121 and the separation membrane 122. Inside the second treatment line 127, the mixed gas compressed by the compression unit 121 flows toward the separation membrane 122.

### (Separation Membrane)

The separation membrane 122 is a device into which the mixed gas compressed by the compression unit 121 is introduced to separate the mixed gas into the ammonia and the other gas. The mixed gas is introduced into the separation membrane 122 from the compression unit 121 via the second treatment line 127. As the separation membrane 122 in the present embodiment, for example, a zeolite separation membrane can be used.

### (First Ammonia Line)

The first ammonia line 130 is a pipe that guides the ammonia separated from the mixed gas by the separation membrane 122 to the tank 40. The first ammonia line 130 connects the separation membrane 122 and the tank 40. Inside the first ammonia line 130, the ammonia separated by the separation membrane 122 flows toward the tank 40.

### (Cooling section)

The cooling section 123 is a device that cools the ammonia separated by the separation membrane 122 and returns the ammonia into the tank 40. The cooling section 123 is a heat exchanger provided in an intermediate portion of the first ammonia line 130. For example, cooling water is introduced into the cooling section 123 from the outside of the BOG supply system. As the cooling water, for example, seawater or fresh water produced by a fresh water generator (not illustrated) is adopted.

The cooling section 123 cools the ammonia by exchanging heat between the cooling water and the ammonia flowing toward the tank 40 inside the first ammonia line 130.

### (Gas Line)

The gas line 132 is a pipe that takes the other gas separated from the mixed gas by the separation membrane 122 to the outside of the BOG treatment system 120. One end of the gas line 132 is connected to the separation membrane 122. The other end of the gas line 132 extends to the outside of the floating main structure 10. When a small amount of the ammonia is contained in the other gas circulating inside the gas line 132, a diluting device (not illustrated) for reducing concentration of the ammonia by mixing external air with the ammonia contained in the other gas (illustrated) may be provided in an intermediate portion of the gas line 132.

### (Operational Effect)

According to the configuration of the floating structure 1 in the above-described embodiment, the mixed gas stored as a gas phase fraction inside the tank 40 is guided to and compressed by the compression unit 121, and thereafter, the mixed gas becomes the ammonia through the separation membrane 122. The ammonia separated from the mixed gas is cooled by the cooling section 123, and is returned into the tank 40. A ratio of the other gas in the gas phase fraction inside the tank 40 can be reduced by repeating this action. Therefore, a calorific value per unit volume of the mixed gas stored as the gas phase fraction inside the tank 40 can be increased.

In addition, according to the configuration of the floating structure 1 in the above-described embodiment, the ammonia remaining inside the combustion device 30, inside the supply line 51, and inside the return line 52 is introduced into the temporary storage unit 81, and the ammonia vaporized inside the temporary storage unit 81 is returned into the tank 40 together with the other gas. That is, the ammonia remaining inside the combustion device 30, inside the supply line 51, and inside the return line 52 can be recovered into the tank 40 together with the other gas. On the other hand, a ratio of the other gas in the mixed gas inside the tank 40 can be reduced. Therefore, a calorific value of the mixed gas inside the tank 40 is not reduced. Therefore, the ammonia inside the combustion device 30, inside the supply line 51, and inside the return line 52 can be positively recovered together with the other gas.

### [Second Embodiment]

Next, a floating structure according to a second embodiment of the present disclosure will be described with reference to the drawings. In the second embodiment, a configuration of a BOG treatment system is different from that of the BOG treatment system 120 of the first embodiment. Therefore, the same reference numerals will be assigned to elements the same as those according to the first embodiment, and repeated description will be omitted.

### (BOG Treatment System)

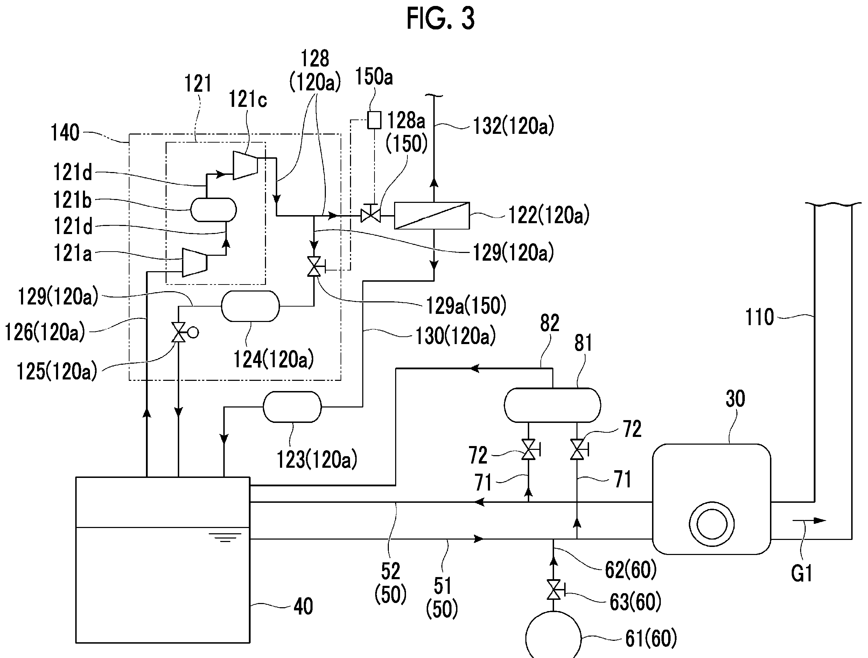

As illustrated in Fig. 3, a BOG treatment system 120a includes the first treatment line 126, the compression unit 121, the separation line 128, the separation membrane 122, the first ammonia line 130, the cooling section 123, the gas line 132, a re-liquefying line 129, a condenser 124, an expansion valve 125, and a switching unit 150.

The first ammonia line 130, the cooling section 123, and the gas line 132 in the present embodiment have the same configurations as those in the first embodiment.

### (First Treatment Line)

The first treatment line 126 is a pipe that guides the mixed gas inside the tank 40 to the compression unit 121. The first treatment line 126 connects the tank 40 and a first compressor 121a of the compression unit 121. Inside the first treatment line 126, the mixed gas introduced from the tank 40 flows toward the first compressor 121a included in the compression unit 121.

### (Compression Unit)

The compression unit 121 compresses the mixed gas inside the tank 40. The compression unit 121 of the present embodiment is a multi-stage compressor. The compression unit 121 includes the first compressor 121a, an interstage line 121d, an economizer 121b, and a second compressor 121c.

The first compressor 121a is a compressor that compresses the mixed gas inside the tank 40. The mixed gas is introduced into the first compressor 121a via the first treatment line 126. The first compressor 121a compresses the mixed gas to have an intermediate pressure, and thereafter, discharges the mixed gas. That is, the first compressor 121a is a compressor on a low-pressure side in the compression unit 121.

The interstage line 121d is a pipe that guides the mixed gas discharged from the first compressor 121a on the low-pressure side in the compression unit 121 to the second compressor 121c. The mixed gas compressed by the first compressor 121a flows inside the interstage line 121d.

The economizer 121b is a heat exchanger that cools the mixed gas compressed by the first compressor 121a. The economizer 121b is provided in an intermediate portion of the interstage line 121d. For example, the cooling water is introduced into the economizer 121b from the outside of the BOG supply system. The economizer 121b cools the mixed gas to have a predetermined temperature by exchanging the heat between the cooling water and the mixed gas flowing inside the interstage line 121d.

The second compressor 121c is a compressor that compresses the mixed gas cooled by the economizer 121b. The mixed gas cooled by the economizer 121b via the interstage line 121d is introduced into the second compressor 121c. The second compressor 121c compresses the mixed gas to have a maximum pressure higher than the intermediate pressure, and thereafter, discharges the mixed gas.

### (Separation Line)

The separation line 128 is a pipe that guides the mixed gas compressed by the second compressor 121c of the compression unit 121 to the separation membrane 122. The separation line 128 connects the second compressor 121c of the compression unit 121 and the separation membrane 122. Inside the separation line 128, the mixed gas compressed by the second compressor 121c of the compression unit 121 flows toward the separation membrane 122.

### (Separation Membrane)

The separation membrane 122 has the same configuration as that of the first embodiment. The separation membrane 122 is a device into which the mixed gas compressed by the second compressor 121c of the compression unit 121 is introduced to separate the mixed gas into the ammonia and the other gas. The mixed gas is introduced into the separation membrane 122 from the compression unit 121 via the separation line 128.

### (Re-liquefying Line)

The re-liquefying line 129 is a pipe that guides the mixed gas compressed by the second compressor 121c of the compression unit 121 to the tank 40. The re-liquefying line 129 connects the separation line 128 and the tank 40. That is, one end of the re-liquefying line 129 is connected to branch from the separation line 128, and the other end of the separation line 128 is connected to the tank 40. Inside the re-liquefying line 129, the mixed gas compressed by the second compressor 121c of the compression unit 121 flows toward the tank 40.

### (Condenser)

The condenser 124 is a condenser that cools and condenses the mixed gas compressed by the second compressor 121c of the compression unit 121. That is, the condenser 124 re-liquefies the mixed gas compressed by the second compressor 121c of the compression unit 121. The condenser 124 is provided in an intermediate portion of the re-liquefying line 129.

For example, the cooling water is introduced into the condenser 124 from the outside of the BOG supply system. The condenser 124 cools the cooling water to have a temperature at which the ammonia contained in the mixed gas is condensed, by exchanging the heat between the cooling water and the mixed gas flowing inside the re-liquefying line 129.

### (Expansion Valve)

The expansion valve 125 is a valve that lowers the pressure and lowers the temperature by performing adiabatic expansion on the mixed gas condensed (re-liquefied) by the condenser 124. The expansion valve 125 in the present embodiment is an electronic or mechanical expansion valve, and converts the condensed ammonia fed from the condenser 124 into a gas-liquid mixed fluid. Therefore, the mixed gas flowing into the re-liquefying line 129 from the separation line 128 is re-liquefied by the condenser 124, decompressed and cooled through the adiabatic expansion in the expansion valve 125, and thereafter, flows into the tank 40.

The compression unit 121, the condenser 124, and the expansion valve 125 in the present embodiment form a re-liquefying device 140 for re-liquefying the mixed gas.

### (Switching Unit)

The switching unit 150 is a device which can switch between a state where the mixed gas compressed by the compression unit 121 is supplied to the separation membrane 122 and a state where the mixed gas compressed by the compression unit 121 is supplied to the condenser 124.

The switching unit 150 includes a first switching valve 128a, a second switching valve 129a, and a valve control device 150a.

The first switching valve 128a is an automatically operated valve provided in the separation line 128 on the separation membrane 122 side with respect to a location where the separation line 128 and the re-liquefying line 129 are connected. The first switching valve 128a is in an open state during the other gas separation operation, and is in the closed state at a predetermined timing. When the first switching valve 128a is in the closed state, the first switching valve 128a shuts off the mixed gas flowing inside the separation line 128 so that the mixed gas cannot flow into the separation membrane 122.

The second switching valve 129a is an automatically operated valve provided on the re-liquefying line 129 between a location where the separation line 128 and the re-liquefying line 129 are connected and the condenser 124. The second switching valve 129a is in a closed state when the first switching valve 128a is in an open state, and is in the open state when the first switching valve 128a is in the closed state. When the second switching valve 129a is in the closed state, the second switching valve 129a is shut off so that the mixed gas flowing inside the re-liquefying line 129 cannot flow into the condenser 124.

The valve control device 150a is a device that controls the open and closed states of the first switching valve 128a and the second switching valve 129a. The valve control device 150a, the first switching valve 128a, and the second switching valve 129a are connected in a wired or wireless manner. The valve control device 150a transmits a signal instructing the open and closed states to each of the first switching valve 128a and the second switching valve 129a. The first switching valve 128a and the second switching valve 129a are in the open state or the closed state, based on the signal transmitted from the valve control device 150a.

When the first switching valve 128a is in the open state and the second switching valve 129a is in the closed state, the mixed gas compressed by the compression unit 121 is in a state where the mixed gas can be supplied to the separation membrane 122. The mixed gas supplied to the separation membrane 122 is separated into the other gas and the ammonia by the separation membrane 122. The separated ammonia is cooled into a liquid through the cooling section 123, and thereafter, is returned to the tank 40. That is, in a state where the switching unit 150 supplies the mixed gas compressed by the compression unit 121 to the separation membrane 122, only the ammonia contained in the mixed gas is recovered to the tank 40. In the present embodiment, this state will be referred to as an ammonia recovery mode.

When the first switching valve 128a is in the closed state and the second switching valve 129a is in the open state, the mixed gas compressed by the compression unit 121 is in a state where the mixed gas can be supplied to the condenser 124 provided in the re-liquefying line 129. The mixed gas supplied to the condenser 124 is condensed (re-liquefied) into a liquid, and thereafter, is returned to the tank 40 through the expansion valve 125. That is, in a state where the switching unit 150 supplies the mixed gas compressed by the compression unit 121 to the condenser 124, the mixed gas is re-liquefied. In the present embodiment, this state will be referred to as a re-liquefying mode.

For example, the valve control device 150a automatically switches the mode to the ammonia recovery mode or the re-liquefying mode, based on input information of an operation input unit (not illustrated) of a control panel.

### (Operational Effect)

According to the configuration of the floating structure 1 in the above-described embodiment, the switching unit 150 can switch between the ammonia recovery mode and the re-liquefying mode. The switching unit 150 sets the ammonia recovery mode to reduce a ratio of the other gas in the mixed gas inside the tank 40. For example, when the ratio of the other gas in the mixed gas is reduced, the switching unit 150 sets the re-liquefying mode. In this manner, the mixed gas inside the tank 40 is guided to and compressed by the compression unit 121 of the re-liquefying device 140, and thereafter, is condensed (re-liquefied) by the condenser 124 of the re-liquefying device 140. Therefore, the mixed gas in which the ratio of the ammonia per unit volume is raised can be re-liquefied by the re-liquefying device 140. Therefore, re-liquefying efficiency of the re-liquefying device 140 can be improved.

In addition, the switching unit 150 sets the ammonia recovery mode so that the compressor of the re-liquefying device 140 can be used to compress the mixed gas introduced into the separation membrane 122. Therefore, it is possible to prevent additional installation for an existing facility included in the floating structure 1.

### [Third Embodiment]

Next, a floating structure according to a second embodiment of the present disclosure will be described with reference to the drawings. In the third embodiment, a configuration of a BOG treatment system is different from that of the BOG treatment system 120a of the first embodiment and the second embodiment. Therefore, the same reference numerals will be assigned to elements the same as those according to the first embodiment and the second embodiment, and repeated description will be omitted.

### (BOG Treatment System)

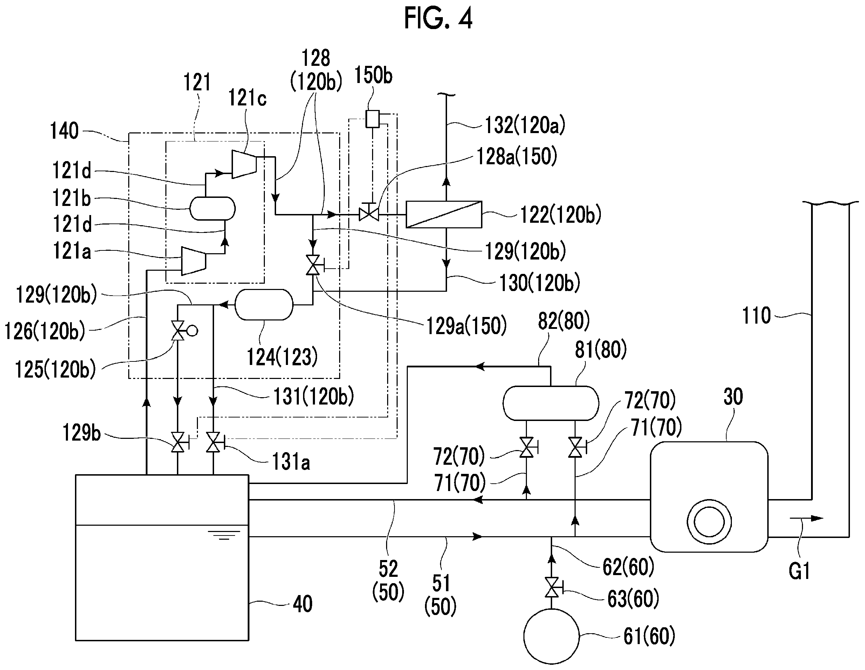

As illustrated in Fig. 4, a BOG treatment system 120b includes the first treatment line 126, the compression unit 121, the separation line 128, the separation membrane 122, the re-liquefying line 129, the first ammonia line 130, the condenser 124, the gas line 132, the expansion valve 125, the second ammonia line 131, and the switching unit 150.

The first treatment line 126, the compression unit 121, the separation line 128, the separation membrane 122, and the gas line 132 in the present embodiment have the same configurations as those in the first embodiment.

### (Re-liquefying Line)

The re-liquefying line 129 is a pipe that guides the mixed gas compressed by the second compressor 121c of the compression unit 121 to the tank 40. The re-liquefying line 129 connects the separation line 128 and the tank 40. That is, one end of the re-liquefying line 129 is connected to branch from the separation line 128, and the other end of the separation line 128 is connected to the tank 40. Inside the re-liquefying line 129, the mixed gas compressed by the second compressor 121c of the compression unit 121 flows toward the tank 40.

### (First Ammonia Line)

The first ammonia line 130 is a pipe that guides the ammonia separated from the mixed gas by the separation membrane 122 to the re-liquefying line 129. The first ammonia line 130 connects the separation membrane 122 and the re-liquefying line 129. Inside the first ammonia line 130, the ammonia separated by the separation membrane 122 flows toward the re-liquefying line 129.

### (Condenser)

The condenser 124 is a heat exchanger that cools and condenses the mixed gas compressed by the second compressor 121c of the compression unit 121 and the ammonia separated from the mixed gas by the separation membrane 122. That is, the condenser 124 in the present embodiment also serves as the cooling section 123 described in the first embodiment and the second embodiment, and re-liquefies the mixed gas compressed by the second compressor 121c of the compression unit 121 and the ammonia separated from the mixed gas by the separation membrane 122. The condenser 124 is provided in the re-liquefying line 129 on the tank 40 side with respect to a location where the re-liquefying line 129 and the first ammonia line 130 are connected.

### (Expansion Valve)

The expansion valve 125 is a valve that lowers the pressure and lowers the temperature by performing adiabatic expansion on the mixed gas condensed (re-liquefied) by the condenser 124. The expansion valve 125 is provided in the re-liquefying line 129 on the tank 40 side with respect to the condenser 124. The expansion valve 125 in the present embodiment is an electronic or mechanical expansion valve, and converts the condensed ammonia fed from the condenser 124 into a gas-liquid mixed fluid. Therefore, the mixed gas flowing inside the re-liquefying line 129 is re-liquefied by the condenser 124, decompressed and cooled through adiabatic expansion in the expansion valve 125, and thereafter, flows into the tank 40.

The fluid flowing into the re-liquefying line 129 from the condenser 124 toward the tank 40 may be the mixed gas or the ammonia in some cases. Hereinafter, both will be simply referred to as fluids.

In the present embodiment, the compression unit 121, the condenser 124, and the expansion valve 125 form the re-liquefying device 140 that re-liquefies the mixed gas.

### (Second Ammonia Line)

The second ammonia line 131 is a pipe that guides the ammonia cooled by the condenser 124 to the tank 40. The second ammonia line 131 connects the re-liquefying line 129 and the tank 40 between the condenser 124 and the expansion valve 125. Inside the second ammonia line 131, the ammonia cooled by the condenser 124 flows toward the tank 40.

### (Switching Unit)

The switching unit 150 is a device which can switch between a state where the mixed gas compressed by the compression unit 121 is supplied to the separation membrane 122 and a state where the mixed gas compressed by the compression unit 121 is directly supplied to the condenser 124.

The switching unit 150 includes the first switching valve 128a, the second switching valve 129a, a third switching valve 129b, a fourth switching valve 131a, and a valve control device 150b.

The first switching valve 128a is an automatically operated valve provided in the separation line 128 on the separation membrane 122 side with respect to a location where the separation line 128 and the re-liquefying line 129 are connected. The first switching valve 128a is in an open state during the other gas separation operation, and is in the closed state at a predetermined timing. When the first switching valve 128a is in the closed state, the first switching valve 128a shuts off the mixed gas flowing in the separation line 128 so that the mixed gas cannot flow into the separation membrane 122.

The second switching valve 129a is an automatically operated valve provided in the re-liquefying line 129 between a location where the separation line 128 and the re-liquefying line 129 are connected and the condenser 124. The second switching valve 129a is in a closed state when the first switching valve 128a is in an open state, and is in the open state when the first switching valve 128a is in the closed state. When the second switching valve 129a is in the closed state, the second switching valve 129a is shut off so that the mixed gas flowing inside the re-liquefying line 129 cannot flow into the condenser 124.

The third switching valve 129b is an automatically operated valve provided in the re-liquefying line 129 on the tank 40 side with respect to the expansion valve 125. The third switching valve 129b is in the closed state when the first switching valve 128a is in the open state, and is in the open state when the first switching valve 128a is in the closed state. That is, the third switching valve 129b is operated to be in the same open and closed states as those of the second switching valve 129a. When the third switching valve 129b is in the closed state, the third switching valve 129b is shut off so that the fluid flowing inside the re-liquefying line 129 cannot flow into the tank 40.

The fourth switching valve 131a is an automatically operated valve provided in the second ammonia line 131. The fourth switching valve 131a is in the open state when the first switching valve 128a is in the open state, and is in the closed state when the first switching valve 128a is in the closed state. That is, the fourth switching valve 131a is operated to be in the same open and closed states as those of the first switching valve 128a. When the fourth switching valve 131a is in the closed state, the fourth switching valve 131a is shut off so that the fluid flowing inside the second ammonia line 131 cannot flow into the tank 40.

The valve control device 150b is a device that controls and monitors the open and closed states of the first switching valve 128a, the second switching valve 129a, the third switching valve 129b, and the fourth switching valve 131a. The valve control device 150b and the first switching valve 128a, the second switching valve 129a, the third switching valve 129b, and the fourth switching valve 131a are connected in a wired or wireless manner. The valve control device 150b transmits and receives a signal instructing the open and closed states to the first switching valve 128a, the second switching valve 129a, the third switching valve 129b, and the fourth switching valve 131a. The first switching valve 128a, the second switching valve 129a, the third switching valve 129b, and the fourth switching valve 131a are in the open state or the closed state, based on the signal transmitted from the valve control device 150b.

When the first switching valve 128a and the fourth switching valve 131a are in the open state and the second switching valve 129a and the third switching valve 129b are in the closed state, the mixed gas compressed by the second compressor 121c of the compression unit 121 is in a state where the mixed gas can be supplied to the separation membrane 122. The mixed gas supplied to the separation membrane 122 is separated into the other gas and the ammonia by the separation membrane 122. The separated ammonia is cooled through the condenser 124 serving as the cooling section 123, thereafter, flows into the second ammonia line 131, and is returned to the tank 40. That is, in a state where the switching unit 150 supplies the mixed gas compressed by the compression unit 121 to the separation membrane 122, the ammonia contained in the mixed gas is recovered to the tank 40. In the present embodiment, this state will be referred to as an ammonia recovery mode.

When the first switching valve 128a and the fourth switching valve 131a are in the closed state and the second switching valve 129a and the third switching valve 129b are in the open state, the mixed gas compressed by the second compressor 121c of the compression unit 121 is in a state where the mixed gas can be supplied to the condenser 124 provided in the re-liquefying line 129. The mixed gas supplied to the condenser 124 is condensed (re-liquefied) into a liquid, and thereafter, is returned to the tank 40 through the expansion valve 125. That is, in a state where the switching unit 150 supplies the mixed gas compressed by the compression unit 121 to the condenser 124, the mixed gas is re-liquefied. In the present embodiment, this state will be referred to as a re-liquefying mode.

### (Operational Effect)

According to the configuration of the floating structure 1 in the above-described embodiment, the switching unit 150 can switch between the ammonia recovery mode and the re-liquefying mode. The switching unit 150 sets the ammonia recovery mode to reduce a ratio of the other gas in the mixed gas inside the tank 40. When the ratio of the other gas in the mixed gas is reduced, the switching unit 150 sets the re-liquefying mode. In this manner, the mixed gas inside the tank 40 is guided to and compressed by the compression unit 121 of the re-liquefying device 140, and thereafter, is condensed (re-liquefied) by the condenser 124 of the re-liquefying device 140. Therefore, the re-liquefying device 140 re-liquefies the mixed gas in which the ratio of ammonia per unit volume is raised. Therefore, the re-liquefying efficiency of the re-liquefying device 140 can be improved.

In addition, the switching unit 150 sets the ammonia recovery mode so that the compressor of the re-liquefying device 140 is used to compress the mixed gas introduced into the separation membrane 122. The ammonia separated by the separation membrane 122 is condensed (re-liquefied) by the condenser 124 of the re-liquefying device 140 serving as the cooling section 123. Therefore, it is possible to prevent additional installation for an existing facility included in the floating structure 1.

### [Other Embodiments]

Hitherto, the embodiments of the present disclosure have been described in detail with reference to the drawings. The present disclosure is not limited by the embodiments, and is limited only by the appended claims.

In addition, although one end of the plurality of second purge lines 71 described in the embodiment is connected to each of the supply line 51 and the return line 52, the present disclosure is not limited to this configuration. The number of the second purge lines 71 may be any appropriate number, and the number of the second purge lines 71 is not limited to two. For example, one end of the second purge line 71 may be connected to an appropriate location of the combustion device 30.

In addition, in the above-described embodiment, the valve control devices 150a and 150b automatically switch the respective switching valves (first switching valve 128a, second switching valve 129a, third switching valve, and fourth switching valve), based on the input information of the operation input unit. However, the present disclosure is not limited to this configuration. For example, the switching unit 150 may not include the valve control devices 150a and 150b, and may switch between the ammonia recovery mode and the re-liquefying mode by manually switching the respective switching valves included in the switching unit 150.

In addition, in the above-described embodiment, when the combustion device 30 is a main engine or a boiler that uses the gaseous ammonia as the fuel, the gaseous ammonia is supplied from the tank 40 to the combustion device 30 via the supply line 51. In this case, the fuel supply system 50 may not include the return line 52.

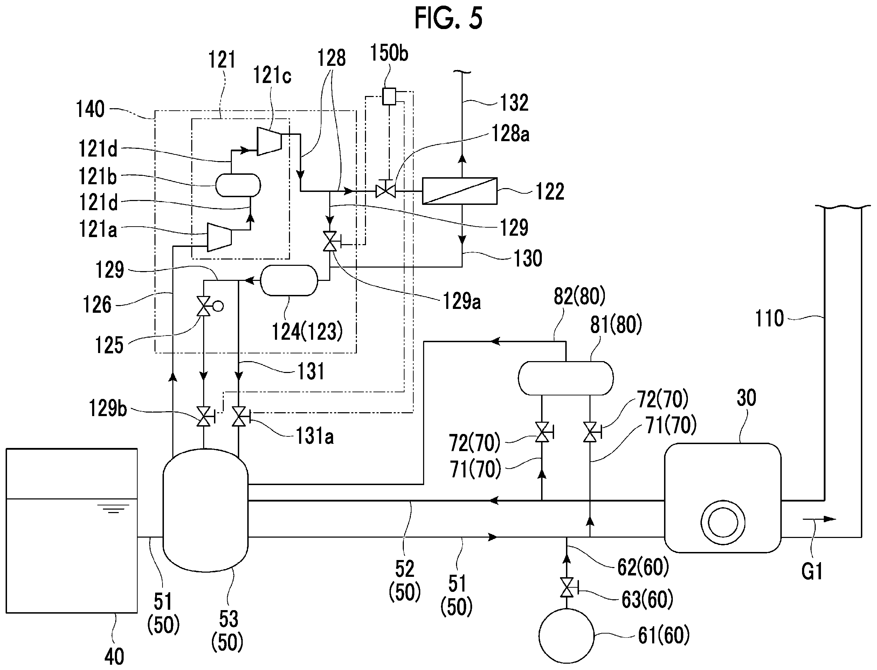

In addition, as illustrated in Fig. 5, the floating structure 1 described in the embodiment may further include an ammonia buffer tank 53 provided in the supply line 51 and to which the other end of the return line 52 is connected. The ammonia buffer tank 53 recovers the fuel ammonia returned without being supplied into the combustion device 30, that is, the fuel ammonia which is not used for combustion, from the combustion device 30. The ammonia buffer tank 53 supplies the recovered ammonia to the supply line 51 as the ammonia to be used again as the fuel for the main engine.

In this case, the first treatment line 126, the re-liquefying line 129, and the first ammonia line 130 or the second ammonia line 131 in the BOG treatment systems 120, 120a, and 120b may be connected to the ammonia buffer tank 53.

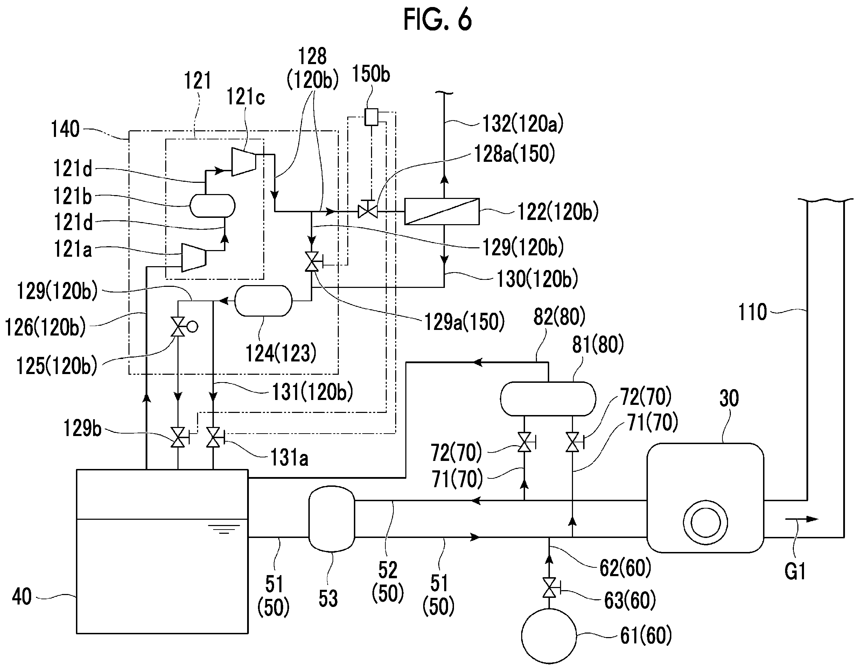

In addition, as illustrated in Fig. 6, when the floating structure 1 includes the ammonia buffer tank 53, the first treatment line 126, the re-liquefying line 129, and the first ammonia line 130 or the second ammonia line 131 in the BOG treatment systems 120, 120a, and 120b may be connected to the tank 40.

In addition, in the above-described embodiment, the floating structure 1 is the ship that uses the ammonia as the fuel. However, the floating structure 1 is not limited to the ship that uses the ammonia as the fuel. The floating structure 1 may use a liquefied gas such as an LNG and an LPG as the fuel. In addition, the floating structure 1 may be a Floating Storage Regasification Unit (FSRU) or Floating Storage Unit (FSU).

### [Additional Notes]

The floating structure 1 described in the embodiments is understood as follows, for example.

(1) According to a first aspect, there is provided the floating structure 1 including in the floating main structure 10, the tank 40 provided in the floating main structure 10, in which the ammonia is stored and the mixed gas of the ammonia and another gas different from the ammonia is stored as the gas phase fraction, the compression unit 121 to which the mixed gas inside the tank 40 is guided to compress the mixed gas, the separation membrane 122 into which the mixed gas compressed by the compression unit 121 are introduced to separate the mixed gas into the ammonia and the other gas, and the cooling section 123 that cools the ammonia separated by the separation membrane 122 and returned into the tank 40.

In this manner, the mixed gas stored as the gas phase fraction inside the tank 40 is guided to and compressed by the compression unit 121, and thereafter, becomes the ammonia through the separation membrane 122. The ammonia separated from the mixed gas is cooled by the cooling section 123, and is returned into the tank 40. A ratio of the other gas in the gas phase fraction inside the tank 40 can be reduced by repeating this action.

(2) In the floating structure 1 according to a second aspect, the floating structure 1 of (1) may further include, the condenser 124 configured to condense the mixed gas compressed by the compression unit 121, and the expansion valve 125 configured to perform the adiabatic expansion on the mixed gas condensed by the condenser 124. The compression unit 121, the condenser 124, and the expansion valve 125 may form the re-liquefying device 140 that re-liquefies the mixed gas. The floating structure 1 may further include the switching unit 150 configured to switch between the ammonia recovery mode in which the mixed gas compressed by the compression unit 121 is supplied to the separation membrane 122 and the re-liquefying mode in which the mixed gas compressed by the compression unit 121 is supplied to the condenser 124.

In this manner, the switching unit 150 sets the ammonia recovery mode so that the ratio of the other gas in the mixed gas inside the tank 40 is reduced. When the ratio of the other gas is reduced, the switching unit 150 sets the re-liquefying mode. In this manner, the mixed gas inside the tank 40 is guided to and compressed by the compression unit 121 of the re-liquefying device 140, and thereafter, is condensed by the condenser 124 of the re-liquefying device 140.

In addition, the compressor of the re-liquefying device 140 can be used to compress the mixed gas introduced into the separation membrane 122.

(3) In the floating structure 1 according to a third aspect, the floating structure 1 of (1) may further include the condenser 124 configured to condense the mixed gas compressed by the compression unit 121, and the expansion valve 125 configured to perform the adiabatic expansion on the mixed gas condensed by the condenser 124. The compression unit 121, the condenser 124, and the expansion valve 125 may form the re-liquefying device 140 that re-liquefies the mixed gas. The condenser 124 may also serve as the cooling section 123. The floating structure 1 may further include the switching unit 150 configured to switch between the ammonia recovery mode in which the mixed gas compressed by the compression unit 121 is supplied to the separation membrane 122 and the ammonia separated by the separation membrane 122 is supplied to the condenser 124, and the re-liquefying mode in which the mixed gas compressed by the compression unit 121 is supplied to the condenser 124 without passing through the separation membrane 122.

In this manner, the switching unit 150 sets the ammonia recovery mode so that the ratio of the other gas in the mixed gas inside the tank 40 is reduced. When the ratio of the other gas is reduced, the switching unit 150 sets the re-liquefying mode. In this manner, the mixed gas inside the tank 40 is guided to and compressed by the compression unit 121 of the re-liquefying device 140, and thereafter, is condensed by the condenser 124 of the re-liquefying device 140.

In addition, the compressor of the re-liquefying device 140 is used to compress the mixed gas introduced into the separation membrane 122, and the ammonia separated by the separation membrane 122 is cooled by the condenser 124 of the re-liquefying device 140 serving as the cooling section 123.

(4) In the floating structure 1 according to a fourth aspect, the floating structure 1 according to any one of (1) to (3) may further include the supply line 51 that supplies the ammonia stored in the tank 40 to the combustion device 30 as the fuel, the gas supply device configured to supply the other gas from the tank 40 to the combustion device 30 via the supply line 51, the temporary storage unit 81 into which the ammonia remaining inside the combustion device 30 and inside the supply line 51 is introduced together with the other gas supplied to the combustion device 30 via the supply line 51, and the recovery line 82 that connects the temporary storage unit 81 and the tank 40 and returns the ammonia vaporized inside the temporary storage unit 81 into the tank 40 together with the other gas.

In this manner, the ammonia remaining inside the combustion device 30 and inside the supply line 51 is introduced into the temporary storage unit 81, and the ammonia vaporized inside the temporary storage unit 81 is returned into the tank 40 together with the other gas. That is, the ammonia remaining inside the combustion device 30 can be recovered into the tank 40 together with the other gas. On the other hand, the ratio of the other gas in the mixed gas inside the tank 40 can be reduced. Therefore, the calorific value of the mixed gas inside the tank 40 does not decrease.

### Industrial Applicability

According to the floating structure of the present disclosure, the calorific value per unit volume of the mixed gas stored inside the tank can be increased.

### Reference Signs List

- 1:: Floating structure
- 10:: Floating main structure
- 11A, 11B:: Broadside
- 12:: Bottom
- 13:: Upper deck
- 14:: Bow
- 15:: Stern
- 20:: Superstructure
- 30:: Combustion device
- 40:: Tank
- 50:: Fuel supply system
- 51:: Supply line
- 52:: Return line
- 53:: Ammonia buffer tank
- 60:: Gas supply system
- 61:: Inert gas supply device
- 62:: First purge line
- 63:: First purge valve
- 70:: Purge system
- 71:: Second purge line
- 72:: Second purge valve
- 80:: Ammonia recovery system
- 81:: Temporary storage unit
- 82:: Recovery line
- 110:: Flue
- 120, 120a, 120b:: BOG treatment system
- 121:: Compression unit
- 121a:: First compressor
- 121b:: Economizer
- 121c:: Second compressor
- 121d:: Interstage line
- 122:: Separation membrane
- 123:: Cooling section
- 124:: Condenser
- 125:: Expansion valve
- 126:: First treatment line
- 127:: Second treatment line
- 128:: Separation line
- 128a:: First switching valve
- 129:: Re-liquefying line
- 129a:: Second switching valve
- 129b:: Third switching valve
- 130:: First ammonia line
- 131:: Second ammonia line
- 131a:: Fourth switching valve
- 132:: Gas line
- 140:: Re-liquefying device
- 150:: Switching unit
- 150a, 150b:: Valve control device
- 170:: Hull structure
- 180:: Funnel
- Dv:: Upward-downward direction
- Fa:: Bow-stern direction
- G1:: Exhaust gas

## Claims

1. A floating structure comprising:
a floating main structure;
a tank provided in the floating main structure, in which ammonia is stored and a mixed gas of the ammonia and another gas different from the ammonia is stored as a gas phase fraction;
a compression unit to which the mixed gas inside the tank is guided to compress the mixed gas;
a separation membrane into which the mixed gas compressed by the compression unit is introduced to separate the mixed gas into the ammonia and the other gas; and
a cooling section that cools the ammonia separated by the separation membrane and returned into the tank.

2. The floating structure according to Claim 1, further comprising:
a condenser configured to condense the mixed gas compressed by the compression unit; and
an expansion valve configured to perform adiabatic expansion on the mixed gas condensed by the condenser,
wherein the compression unit, the condenser, and the expansion valve form a re-liquefying device that re-liquefies the mixed gas, and
the floating structure further comprises a switching unit configured to switch between an ammonia recovery mode in which the mixed gas compressed by the compression unit is supplied to the separation membrane, and a re-liquefying mode in which the mixed gas compressed by the compression unit is supplied to the condenser.

3. The floating structure according to Claim 1, further comprising:
a condenser configured to condense the mixed gas compressed by the compression unit; and
an expansion valve configured to perform adiabatic expansion on the mixed gas condensed by the condenser,
wherein the compression unit, the condenser, and the expansion valve form a re-liquefying device that re-liquefies the mixed gas,
the condenser also serves as the cooling section, and
the floating structure further comprises a switching unit configured to switch between an ammonia recovery mode in which the mixed gas compressed by the compression unit is supplied to the separation membrane and the ammonia separated by the separation membrane is supplied to the condenser, and a re-liquefying mode in which the mixed gas compressed by the compression unit is supplied to the condenser without passing through the separation membrane.

4. The floating structure according to any one of Claims 1 to 3, further comprising:
a supply line that supplies the ammonia stored in the tank to a combustion device as a fuel;
a gas supply device configured to supply the other gas from the tank to the combustion device via the supply line;
a temporary storage unit into which the ammonia remaining inside the combustion device and inside the supply line is introduced together with the other gas supplied to the combustion device via the supply line; and
a recovery line that connects the temporary storage unit and the tank and returns the ammonia vaporized inside the temporary storage unit into the tank together with the other gas.

## Patentansprüche

1. Schwimmende Struktur, umfassend:
eine schwimmende Hauptstruktur;
einen Tank, der in der schwimmenden Hauptstruktur bereitgestellt ist, in dem Ammoniak gespeichert ist und ein Gasgemisch bzw. Mischgas aus Ammoniak und einem weiteren, von Ammoniak unterschiedlichen Gas als ein Gasphasenanteil gespeichert ist;
eine Kompressionseinheit, zu der das Mischgas innerhalb des Tanks geleitet wird, um das Mischgas zu komprimieren;
eine Trennmembran, in die das durch die Kompressionseinheit komprimierte Mischgas eingebracht wird, um das Mischgas in Ammoniak und das andere Gas zu trennen; und
einen Kühlabschnitt, der das Ammoniak kühlt, das durch die Trennmembran abgetrennt und in den Tank zurückführt wird.

2. Schwimmende Struktur nach Anspruch 1, ferner umfassend:
einen Kondensator, der konfiguriert ist, das durch die Kompressionseinheit komprimierte Mischgas zu kondensieren; und
ein Expansionsventil, das konfiguriert ist, eine adiabatische Expansion des durch den Kondensator kondensierten Mischgases durchzuführen,
wobei die Kompressionseinheit, der Kondensator und das Expansionsventil eine Wiederverflüssigungsvorrichtung bilden, die das Mischgas wieder verflüssigt, und
die schwimmende Struktur ferner eine Schalteinheit umfasst, die konfiguriert ist, zwischen einem Ammoniakrückgewinnungsmodus, in dem das durch die Kompressionseinheit komprimierte Mischgas der Trennmembran zugeführt wird, und einem Wiederverflüssigungsmodus umzuschalten, in dem das durch die Kompressionseinheit komprimierte Mischgas dem Kondensator zugeführt wird.

3. Schwimmende Struktur nach Anspruch 1, ferner umfassend:
einen Kondensator, der konfiguriert ist, das durch die Kompressionseinheit komprimierte Mischgas zu kondensieren; und
ein Expansionsventil, das konfiguriert ist, eine adiabatische Expansion des durch den Kondensator kondensierten Mischgases durchzuführen,
wobei die Kompressionseinheit, der Kondensator und das Expansionsventil eine Wiederverflüssigungsvorrichtung bilden, die das Mischgas wieder verflüssigt, und
der Kondensator auch als der Kühlabschnitt dient und
die schwimmende Struktur ferner eine Schalteinheit umfasst, die konfiguriert ist, zwischen einem Ammoniakrückgewinnungsmodus, in dem das durch die Kompressionseinheit komprimierte Mischgas der Trennmembran zugeführt wird und das durch die Trennmembran abgetrennte Ammoniak dem Kondensator zugeführt wird, und einem Wiederverflüssigungsmodus umzuschalten, in dem das durch die Kompressionseinheit komprimierte Mischgas dem Kondensator zugeführt wird, ohne durch die Trennmembran zu verlaufen.

4. Schwimmende Struktur nach einem der Ansprüche 1 bis 3, ferner umfassend:
eine Zufuhrleitung, die das in dem Tank gespeicherte Ammoniak einer Verbrennungsvorrichtung als Brennstoff führt;
eine Gaszufuhrvorrichtung, die konfiguriert ist, das andere Gas aus dem Tank der Verbrennungsvorrichtung über die Zufuhrleitung zuzuführen;
eine temporäre Speichereinheit, in die das in der Verbrennungsvorrichtung und innerhalb der Zufuhrleitung verbliebene Ammoniak zusammen mit dem anderen Gas, das der Verbrennungsvorrichtung über die Zufuhrleitung zugeführt wird, eingebracht wird; und
eine Rückgewinnungsleitung, welche die temporäre Speichereinheit und den Tank verbindet und das innerhalb der temporären Speichereinheit verdampfte Ammoniak zusammen mit dem anderen Gas in den Tank zurückführt.

## Revendications

1. Structure flottante comprenant :
une structure principale flottante ;
un réservoir prévu dans la structure principale flottante, dans lequel de l'ammoniac est stocké et un mélange gazeux de l'ammoniac et d'un autre gaz différent de l'ammoniac est stocké en tant que fraction en phase gazeuse ;
une unité de compression vers laquelle le mélange gazeux à l'intérieur du réservoir est guidé pour comprimer le mélange gazeux ;
une membrane de séparation dans laquelle le mélange gazeux comprimé par l'unité de compression est introduit pour séparer le mélange gazeux en ammoniac et l'autre gaz ; et
une section de refroidissement qui refroidit l'ammoniac séparé par la membrane de séparation et renvoyé dans le réservoir.

2. Structure flottante selon la revendication 1, comprenant en outre :
un condenseur configuré pour condenser le mélange gazeux comprimé par l'unité de compression ; et
un détendeur configuré pour réaliser une détente adiabatique sur le mélange gazeux condensé par le condenseur,
dans laquelle l'unité de compression, le condenseur et le détendeur forment un dispositif de reliquéfaction qui reliquéfie le mélange gazeux, et
la structure flottante comprend en outre une unité de commutation configurée pour commuter entre un mode de récupération d'ammoniac dans lequel le mélange gazeux comprimé par l'unité de compression est fourni à la membrane de séparation, et un mode de reliquéfaction dans lequel le mélange gazeux comprimé par l'unité de compression est fourni au condenseur.

3. Structure flottante selon la revendication 1, comprenant en outre :
un condenseur configuré pour condenser le mélange gazeux comprimé par l'unité de compression ; et
un détendeur configuré pour réaliser une détente adiabatique sur le mélange gazeux condensé par le condenseur,
dans laquelle l'unité de compression, le condenseur et le détendeur forment un dispositif de reliquéfaction qui reliquéfie le mélange gazeux,
le condenseur sert également de section de refroidissement, et
la structure flottante comprend en outre une unité de commutation configurée pour basculer entre un mode de récupération d'ammoniac dans lequel le mélange gazeux comprimé par l'unité de compression est fourni à la membrane de séparation et l'ammoniac séparé par la membrane de séparation est fourni au condenseur, et un mode de reliquéfaction dans lequel le mélange gazeux comprimé par l'unité de compression est fourni au condenseur sans traverser la membrane de séparation.

4. Structure flottante selon l'une quelconque des revendications 1 à 3, comprenant en outre :
une conduite d'alimentation qui fournit l'ammoniac stocké dans le réservoir à un dispositif de combustion en tant que combustible ;
un dispositif d'alimentation en gaz configuré pour fournir l'autre gaz du réservoir au dispositif de combustion via la conduite d'alimentation ;
une unité de stockage temporaire dans laquelle l'ammoniac restant à l'intérieur du dispositif de combustion et à l'intérieur de la conduite d'alimentation est introduit avec l'autre gaz fourni au dispositif de combustion via la conduite d'alimentation ; et
une conduite de récupération qui relie l'unité de stockage temporaire et le réservoir et renvoie l'ammoniac vaporisé à l'intérieur de l'unité de stockage temporaire dans le réservoir avec l'autre gaz.
